# FASCICULE DE BREVET EUROPEEN

(11) **EP 2 173 604 B1**
(45) Date de publication et mention de la délivrance du brevet: **26.12.2012**
(21) Numéro de dépôt: 08827231.5
(22) Date de dépôt: 06.08.2008
(51) Int. Cl.: B62D 65/16, B62D 25/16, B62D 25/08

(54) **AGENCEMENT DE FIXATION DE DEUX ELEMENTS DE CARROSSERIE ADJACENTS**
ANORDNUNG ZUR BEFESTIGUNG ZWEIER BENACHBARTER KAROSSERIE-ELEMENTE
ARRANGEMENT FOR FASTENING TWO ADJACENT BODYWORK ELEMENTS

(30) Priorité: 10.08.2007 FR 0757032
(43) Date de publication de la demande: 14.04.2010
(73) Titulaire: Renault S.A.S., 92100 Boulogne-Billancourt (FR)
(72) Inventeur: GUEGAN, Christophe, F-28410 Boutigny-Provais (FR); OUDDANE, Abdelhak, F-92210 Saint-cloud (FR)
(74) Mandataire: Fantin, Teddy
(86) Numéro de dépôt international: PCT/FR2008/051465
(87) Numéro de publication internationale: WO 2009/022082

(56) Documents cités:
- EP-A- 0 720 935
- EP-A- 0 791 527
- EP-A- 0 970 854
- EP-A- 1 319 581
- US-A1- 2004 004 370
- US-B1- 6 641 191

## Description

La présente invention concerne un agencement de fixation de deux éléments de carrosserie de véhicule adjacents.

Plus particulièrement l'invention concerne un agencement de fixation d'un premier élément de carrosserie par rapport à un second élément de carrosserie adjacent.

La publication EP 1 319 581 propose un élément de carrosserie d'un véhicule possédant des moyens de fixations d'un écran de passage de roue. Ces moyens de fixations sont des ailettes perforées situés sur le rebord de l'élément de carrosserie entourant une partie du passage de roue. Ces ailettes perforées permettent le vissage ou le rivetage de l'écran de passage de roue qui vient se positionner derrière les ailettes.

Cependant, un tel agencement ne permet une indexation précise de l'écran par rapport à l'élément de carrosserie qui peut notamment se déplacer sous l'effort de vissage.

Le document EP 0 970 854 décrit un agencement de fixation de deux éléments de carrosserie selon le preambule de la revendication 1.

Cependant, les solutions de fixation d'éléments de carrosserie par emboîtement ou encliquetage ne permettent pas un maintien suffisant lorsqu'un des deux éléments est soumis à de fortes contraintes ou à un choc important pouvant entraîner le désassemblage de l'ensemble.

Le but de l'invention, est de proposer un agencement de fixation de deux éléments de carrosserie adjacents amélioré, permettant une fixation robuste et un positionnement précis des deux éléments.

Dans ce but, l'invention propose un agencement de fixation de deux éléments de carrosserie adjacents, selon la revendication 1

Selon d'autres caractéristiques de l'invention, les moyens de positionnement peuvent être des ailettes s'étendant dans un plan perpendiculaire au premier élément de carrosserie et perpendiculaire au retour du premier élément.

Les ailettes peuvent présenter une première arête située en regard de retour du bord du premier élément de carrosserie, cette première arête pouvant comporter une première partie sensiblement parallèle au retour située à la base de l'ailette proche du bouclier et en regard du retour, et une seconde partie concave de manière à s'éloigner du retour.

Le premier élément de carrosserie peut comporter au moins deux moyens de positionnement qui sont situés de part et d'autre de l'axe de l'orifice du retour.

L'invention protège également un bouclier de véhicule comprenant un retour s'étendant le long d'un bord dudit bouclier et au moins un orifice située sur une portion du retour pour le passage d'un moyen de fixation, le bouclier comprenant au moins un moyen de positionnement apte à maintenir et positionner un second élément de carrosserie contre le retour, le moyen de positionnement étant situé sensiblement en regard de la portion du retour comprenant l'orifice.

L'invention sera désormais décrite dans un exemple en référence aux dessins annexés suivants :

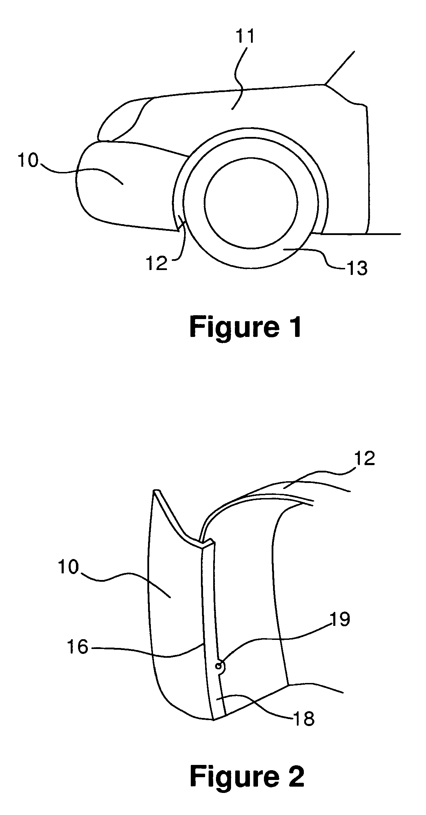

- la figure 1 est un schéma partiel d'un véhicule vu de coté ;
- la figure 2 est une vue d'ensemble arrière de l'agencement de l'invention ;

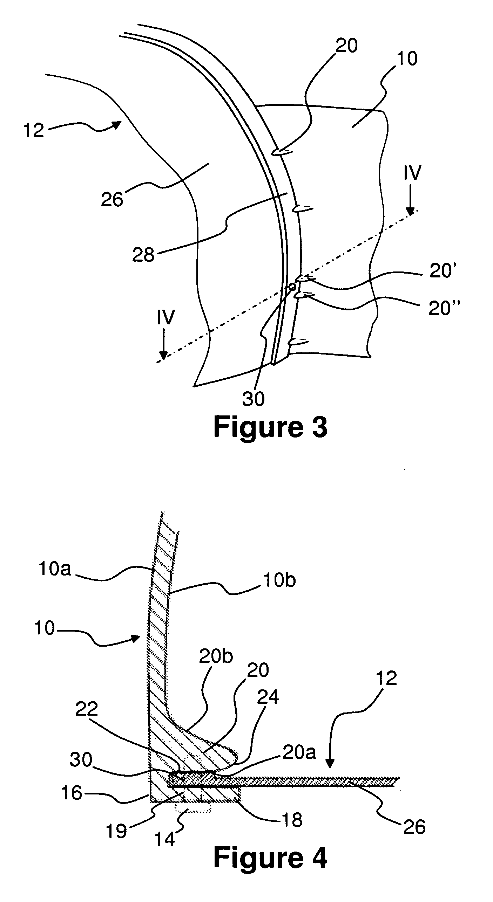

- La figure 3 est une vue d'ensemble avant de l'agencement de l'invention ;
- La figure 4 est une vue en coupe selon l'axe IV-IV de l'agencement selon l'invention ;

En référence aux figures, un véhicule automobile comporte différents éléments de carrosserie 10 et 11 définissant une ouverture en arc de cercle pour le passage d'une des roues 13 du véhicule.

Dans cet exemple, un premier élément de carrosserie 10 définissant partiellement l'ouverture du passage de roue est le bouclier avant 10 du véhicule. Un bord de ce bouclier 10 en matériau polymère, définie donc une portion de l'ouverture en arc de cercle du passage de roue.

Un second élément de carrosserie 12, appelé écran de passage de roue, est positionné dans le prolongement de l'ouverture de passage de roue de manière à envelopper la roue 13, et séparer le passage de roue de l'espace intérieure du véhicule comme par exemple le compartiment moteur.

Cet écran 12, en matériau polymère, permet d'éviter les projections de la roue 13 vers l'intérieur du compartiment moteur. Dans certain cas comme dans cet exemple, il permet aussi de guider une partie du flux d'air circulant dans le véhicule vers les freins pour éviter leur échauffement. L'écran de passage de roue 12 subit donc des contraintes importantes, et est fixé au bouclier avant 10 par des moyens de fixations comme des vis 14 ou des rivets.

Le bord 16 du bouclier 10 définissant l'ouverture du passage de roue, possède un retour 18 s'étendant perpendiculairement au bouclier 10 vers l'intérieur du passage de roue. Ce retour 18 mesure quelques centimètres de longueur 2 centimètres dans cet exemple. Au moins une portion du retour 18 présente un orifice 19 destiné aux moyens de fixation 14 de l'écran de passage de roue 12.

Le bouclier 10 possède une face d'aspect externe 10a et une face interne 10b. La face interne 10b présente des ailettes 20 s'étendant dans des plans perpendiculaires à cette face interne 10b et radiaux par rapport à l'ouverture du passage de roue en arc de cercle c'est-à-dire dans des plans perpendiculaires au retour 18. Ces ailettes 20 sont situées espacées de 1 à 30 centimètres le long du bord 16 du bouclier.

Chaque ailette 20 présente une première arête 20a et une seconde arête 20b.

La première arête 20a se situe en regard de retour 18 du rebord du bouclier 10. Une première partie 22 de cette arête 20a proche du bouclier 10 est sensiblement parallèle au retour 18, et distante d'environ 4 millimètres de ce dernier. Une seconde partie 24 de cette arête 20a est concave de manière à s'éloigner du retour 18.

La seconde arête 20b forme un angle avec la surface interne 10b du bouclier 10 de manière à ce que la base de l'ailette 20 soit plus large que l'extrémité de l'ailette 20.

Dans cet exemple, deux ailettes 20' et 20" sont situées en regard de la portion du retour comportant l'orifice 19 et de part et d'autre de l'axe dudit orifice 19.

L'écran de passage de roue 12 comprend une première partie 26 formant une paroi plane courbée s'étendant perpendiculairement au bord des éléments de carrosserie 10 et 11 formant l'ouverture du passage de roue.

L'écran 12 comprend aussi une seconde partie non représentée, formant une surface adaptée à diriger un flux d'air vers les éléments chauffants du train roulant du véhicule tels que les freins.

La première partie 26 de l'écran de passage de roue 12 possède un bord externe 28 adapté au positionnement de l'écran 12 par rapport aux éléments de carrosserie 10 et 11. Ce bord présente une surépaisseur de quelques millimètres par rapport au reste de l'écran 12.

Ainsi l'épaisseur du bord externe 28 de l'écran 12 est sensiblement égale ou légèrement inférieure à la distance entre le retour 18 du bouclier 10 et la première partie 22 de la première arête 20a des ailettes 20. De cette manière l'écran de passage 12 peut se positionner entre le retour 18 et les ailettes 20 du bouclier 10.

Le bord externe 28 possède au moins un logement 30 destiné à recevoir les moyens de fixation 14. Ainsi, lorsque l'écran 12 est correctement positionné par rapport au bouclier 10, le logement 30 est situé dans l'axe de l'orifice de fixation 19 du bouclier 10.

Lors du montage de l'écran 12 sur le bouclier 10, l'opérateur vient positionner le bord externe 28 de l'écran 12 contre la partie intérieure du retour 18 du bouclier. La seconde partie 24 concave des arêtes 20a des ailettes 20 puis la première partie 22 des arêtes 20a permettent avantageusement de guider l'écran 12 contre le retour 18.

Une fois l'écran positionné par rapport au bouclier, l'opérateur de montage peut introduire la vis de fixation 14 dans l'orifice 19 du bouclier 10 et la visser dans le logement 30 de l'écran 12. Les deux ailettes 20' et 20" situées en regard de la portion du retour comprenant l'orifice 19, de part et d'autre de l'axe dudit orifice 19, permettent avantageusement de maintenir l'écran 12 contre le retour 18 en l'empêchant de s'éloigner du retour 18 sous l'effort de vissage tout en laissant libre l'arrière du logement 30 pour que la vis 14 puisse faire saillie au-delà de ce logement.

## Revendications

1. Agencement de fixation de deux éléments adjacents de carrosserie de véhicule (10 et 12), le premier élément (10) de carrosserie comprenant un retour (18) s'étendant le long d'un bord (16) du premier élément (10) et au moins un orifice (19) située sur une portion du retour (18) pour le passage d'un moyen de fixation (14), un bord externe (28) du second élément de carrosserie (12) étant positionné contre une partie intérieure du retour (18), ce bord externe (28) comprenant au moins un logement de fixation (30) situé en regard de l'orifice (19), **caractérisé en ce que** le premier élément (10) possède une face interne (10b) présentant des ailettes (20) de positionnement (20) du second élément (12) de carrosserie, ces ailettes (20) s'étendant perpendiculairement à la face interne (10b) et au retour (18), en regard de la portion du retour (18) comprenant l'orifice (19), le moyen de fixation (14), de type vis ou rivet, étant introduit dans l'orifice (19) de façon à être fixé au logement de fixation (30) du second élément (12) de carrosserie.

2. Agencement de fixation selon la revendication 1, **caractérisé en ce que** la distance entre chaque ailette (20) et le retour (18) du premier élément de carrosserie (10) est sensiblement égale à l'épaisseur du bord externe (28) du second élément de carrosserie (12).

3. Agencement de fixation selon la revendication 2, **caractérisé en ce que** l'ailette (20) présente une première arête (20a) située en regard de retour (18) du bord du premier élément de carrosserie (10).

4. Agencement de fixation selon la revendication 3, **caractérisé en ce qu'**une première partie (22) de la première arête (20a) est sensiblement parallèle au retour (18), ladite première partie (22) étant située à la base de l'ailette (20) proche du premier élément de carrosserie (10) et en regard du retour (18).

5. Agencement de fixation selon une des revendications 3 ou 4, **caractérisé en ce qu'**une seconde partie (24) de la première arête (20a) est concave de manière à s'éloigner du retour (18).

6. Agencement de fixation selon une des revendications précédentes, **caractérisé en ce que** le premier élément de carrosserie (10) comporte au moins deux ailettes (20) qui sont situées de part et d'autre de l'axe de l'orifice (19) du retour (18).

7. Agencement de fixation selon une des revendications précédentes, **caractérisé en ce que** le premier élément de carrosserie (10) est un bouclier du véhicule et le second élément de carrosserie (12) est un écran de passage de roue.

## Claims

1. Arrangement for fastening two adjacent vehicle bodywork elements (10 and 12), the first bodywork element (10) comprising a return (18) extending along an edge (16) of the first element (10) and at least one orifice (19) situated on a portion of the return (18) through which a fastener (14) can pass, an outer edge (28) of the second bodywork element (12) being positioned against an inside part of the return (18), this outer edge (28) comprising at least one fastening housing (30) situated facing the orifice (19), **characterized in that** the first element (10) has an inner face (10b) having fins (20) for the positioning (20) of the second bodywork element (12), these fins (20) running perpendicular to the inner face (10b) and to the return (18) facing that portion of the return (18) that comprises the orifice (19), t h e fastener (14), of screw or rivet type, being introduced into the orifice (19) so as to be fixed to the fastening housing (30) belonging to the second bodywork element (12).

2. Fastening arrangement according to Claim 1, **characterized in that** the distance between each fin (20) and the return (18) of the first bodywork element (10) is substantially equal to the thickness of the outer edge (28) of the second bodywork element (12).

3. Fastening arrangement according to Claim 2, **characterized in that** the fin (20) has a first edge corner (20a) situated facing the return (18) of the edge of the first bodywork element (10).

4. Fastening arrangement according to Claim 3, **characterized in that** a first part (22) of the first edge corner (20a) is substantially parallel to the return (18), the said first part (22) being situated at the base of the near fin (20) of the first bodywork element (10) and facing the return (18).

5. Fastening arrangement according to one of Claims 3 and 4, **characterized in that** a second part (24) of the first edge corner (20a) is concave so as to keep it away from the return (18).

6. Fastening arrangement according to one of the preceding claims, **characterized in that** the first bodywork element (10) comprises at least two fins (20) which are situated one on each side of the axis of the orifice (19) of the return (18).

7. Fastening arrangement according to one of the preceding claims, **characterized in that** the first bodywork element (10) is a bumper of the vehicle and the second bodywork element (12) is a wheel arch lining.

## Patentansprüche

1. Anordnung zur Befestigung zweier benachbarter Fahrzeugkarosserieelemente (10 und 12), wobei das erste Karosserieelement (10) einen Umschlag (18), der sich entlang einem Rand (16) des ersten Elements (10) erstreckt, und mindestens eine Öffnung (19) umfasst, die an einem Abschnitt des Umschlags (18) zum Durchgang eines Befestigungsmittels (14) angeordnet ist, wobei ein äußerer Rand (28) des zweiten Karosserieelements (12) gegen einen inneren Teil des Umschlags (18) positioniert ist, wobei dieser äußere Rand (28) mindestens eine Befestigungsaufnahme (30) umfasst, die gegenüber der Öffnung (19) angeordnet ist, **dadurch gekennzeichnet, dass** das erste Element (10) eine Innenfläche (10b) besitzt, die Rippen (20) zur Positionierung (20) des zweiten Karosserieelements (12) aufweist, die sich gegenüber dem Abschnitt des Umschlags (18), der die Öffnung (19) umfasst, senkrecht zur Innenfläche (10b) und zum Umschlag (18) erstrecken, wobei das Befestigungsmittel (14) in der Art einer Schraube oder eines Niets so in die Öffnung (19) eingeführt ist, dass es in der Befestigungsaufnahme (30) des zweiten Karosserieelements (12) befestigt ist.

2. Befestigungsanordnung nach Anspruch 1, **dadurch gekennzeichnet, dass** der Abstand zwischen jeder Rippe (20) und dem Umschlag (18) des ersten Karosserieelements (10) im Wesentlichen gleich der Dicke des äußeren Rands (28) des zweiten Karosserieelements (12) ist.

3. Befestigungsanordnung nach Anspruch 2, **dadurch gekennzeichnet, dass** die Rippe (20) eine erste Kante (20a) aufweist, die gegenüber dem Umschlag (18) am Rand des ersten Karosserieelements (10) angeordnet ist.

4. Befestigungsanordnung nach Anspruch 3, **dadurch gekennzeichnet, dass** ein erster Teil (22) der ersten Kante (20a) im Wesentlichen parallel zum Umschlag (18) verläuft, wobei der erste Teil (22) an der Basis der Rippe (20) in der Nähe des ersten Karosserieelements (10) und gegenüber dem Umschlag (18) angeordnet ist.

5. Befestigungsanordnung nach Anspruch 3 oder 4, **dadurch gekennzeichnet, dass** ein zweiter Teil (24) der ersten Kante (20a) konkav ist, so dass er sich vom Umschlag (18) entfernt.

6. Befestigungsanordnung nach einem der vorhergehenden Ansprüche, **dadurch gekennzeichnet, dass** das erste Karosserieelement (10) mindestens zwei Rippen (20) umfasst, die sich beiderseits der Achse der Öffnung (19) des Umschlags (18) befinden.

7. Befestigungsanordnung nach einem der vorhergehenden Ansprüche, **dadurch gekennzeichnet, dass** das erste Karosserieelement (10) eine Stoßstange des Fahrzeugs ist und das zweite Karosserieelement (12) ein Radkastenschutz ist.
